# EUROPÄISCHE PATENTSCHRIFT

(11) **EP 1 259 968 B1**
(45) Veröffentlichungstag und Bekanntmachung des Hinweises auf die Patenterteilung: **02.05.2007**
(21) Anmeldenummer: 00960480.2
(22) Anmeldetag: 16.08.2000
(51) Int. Cl.: H01G 4/12, H01Q 9/04

(54) **ANTENNE MIT VERBUNDWERKSTOFF**
ANTENNA WITH COMPOSITE MATERIAL
ANTENNE AVEC MATERIAU COMPOSITE

(30) Priorität: 20.08.1999 DE 19939483
(43) Veröffentlichungstag der Anmeldung: 27.11.2002
(73) Patentinhaber: Koninklijke Philips Electronics N.V., 5621 BA Eindhoven (NL); Philips Intellectual Property & Standards GmbH, 20099 Hamburg (DE)
(72) Erfinder: ALBERTSEN, Knuth, NL-5656 AA Eindhoven (NL); GROEN, Wilhelm-Albert, NL-5656 AA Eindhoven (NL); SCHLENKER, Tilman, NL-5656 AA Eindhoven (NL)
(74) Vertreter: Volmer, Georg
(86) Internationale Anmeldenummer: PCT/EP2000/008053
(87) Internationale Veröffentlichungsnummer: WO 2001/015182

(56) Entgegenhaltungen:
- US-A- 4 587 068
- PATENT ABSTRACTS OF JAPAN vol. 1999, no. 13, 30. November 1999 (1999-11-30) & JP 11 214248 A (TEIJIN LTD), 6. August 1999 (1999-08-06)
- PATENT ABSTRACTS OF JAPAN vol. 016, no. 162, 20. April 1992 (1992-04-20) & JP 04 012403 A (NISSAN MOTOR CO LTD), 17. Januar 1992 (1992-01-17) & JP 04 012403 A (NISSAN MOTOR CO LTD) 17. Januar 1992 (1992-01-17)

## Beschreibung

Die Erfindung betrifft ein elektronisches Bauelement, insbesondere eine VielschichtAntenne, mit einem Dielektrikum und mindestens einer Elektrode.

In der elektronischen Industrie werden viele Bauelemente in einer Vielschichtstruktur hergestellt. Dazu zählen beispielsweise Vielschichtkondensatoren, - antennen, -aktuatoren und -varistoren. Mengenmäßig am meisten werden Vielschichtkondensatoren hergestellt.

Keramische Vielschichtbauelemente werden üblicherweise hergestellt, indem man grüne keramische Substratfolien aus meist dielektrischen Komponenten abwechselnd mit Schichten aus einer Metallpaste für die inneren Elektroden übereinander stapelt und anschließend den Stapel aus Keramik- und Metallschichten sintert.

Die Qualität von Vielschichtbauelemente wird sowohl durch die chemische Zusammensetzung des Materials für das Dielektrikum bzw. für die Elektroden als auch durch die Herstellungsbedingungen bestimmt. Bei den Herstellungsbedingungen spielen vor allem die Sinterbedingungen eine Rolle. Abhängig von der Sinteratmosphäre können bei der Sinterung verschiedene, gegenläufige Oxidations- und Reduktionsreaktionen ablaufen. So werden beispielsweise beim Sintern in reduzierender Atmosphäre Bariumtitanat und seine Derivate halbleitend. Sie sind in diesem Zustand als Dielektrikum ungeeignet. Die Sinterung der Vielschichtbauelementen unter oxidierenden Bedingungen kann nur erfolgen, wenn das Elektrodenmaterial aus Rhodium, Palladium oder Platin besteht. Rhodium und Platin sind jedoch sehr teuer, ihr Kostenanteil kann bis zu 50% betragen. Die Entwicklung geht daher dahin, anstelle von Rhodium und Platin sehr viel billigere Metalle wie Ni, Cu, Ag oder deren Legierungen zu verwenden. Diese Metalle oxidieren jedoch bei einer Sinterung unter oxidierenden Bedingungen.

Besonders im Bereich der temperaturstabilen NP0-Materialien, die vielfältige Anwendung im Telekommunikationsbereich finden, ist Bedarf an keramischen Materialien, welche mit billigeren Metallen wie Nickel, Kupfer oder Silber verwendet werden können. Besonders der Einsatz von Silberelektroden ist attraktiv, da bei den im Telekommunikationsbereich verwendeten Frequenzen von über 500 MHz der innere Widerstand aufgrund des sogenannten "Skin-Effektes" einen immer größer werdenden Einfluß hat. Nur Elektroden aus Kupfer, Silber, Gold und Aluminium weisen ausreichend niedrige Werte für den inneren Widerstand auf, die einen Einsatz bei hohen Frequenzen ermöglichen. Für diese Anwendungen sind besonders Kondensatoren mit niedrigen, aber präzisen Kapazitätswerten interessant.

Eine Erniedrigung der Sintertemperaturen auf unter 900 °C, was den Einsatz von Silberelektroden ermöglicht, ist problematisch, da die hochschmelzenden, dielektrischen Materialien mit hochreaktiven, niedrigschmelzenden Gläsern oder anderen Verbindungen gesintert werden müssen. Dies wiederum kann zu Reaktionen zwischen den unterschiedlichen Phasen führen, die dann die Temperaturspezifikation der verwendeten dielektrischen Materialien verändern.

EP-A-1 014 489 beschreibt eine dielektrische Antenne aus Keramik.

Der Erfindung liegt die Aufgabe zugrunde, ein elektronisches Bauelement, insbesondere eine Vielschichtantenne bereitzustellen, das preiswert herzustellen ist.

Die Aufgabe wird gelöst, durch eine Antenne mit einem Dielektrikum und mindestens einer Elektrode, dadurch gekennzeichnet, daß das Dielektrikum einen Verbundwerkstoff aus einem dielektrischen, keramischen Material und einem organischen Polymer enthält.

Üblicherweise werden passive keramische Bauelemente zur Verfestigung des Dielektrikums gesintert. Dabei kommt es zu einer Schrumpfung bzw. Dichtezunahme im Dielektrikum, die je nach Art des Werkstoffes, der Korngrößenverteilung des Ausgangspulvers und den Reaktionsbedingungen (Sintertemperatur, Sinterzeit, Sinteratmosphäre) unterschiedlich stark ausfällt. Beim erfindungsgemäßen Bauelement erfolgt die Verfestigung des Dielektrikums mit Hilfe eines Polymers. Dabei wird zunächst das dielektrische, keramische Material mit dem Monomer eines geeigneten Polymers gemischt und anschließend wird das Monomer polymerisiert. Dadurch wird ein Sintern überflüssig.

Es ist bevorzugt, daß das organische Polymer nicht löslich in Wasser ist.

Die Verwendung eines wasserunlöslichen Polymers verhindert Änderungen der Eigenschaften und der Form des passiven Bauelementes beziehungsweise des Dielektrikums, die durch Eintritt von Feuchtigkeit hervorgerufen werden können.

Es weiterhin bevorzugt, daß das Polymer ein Polyimid, Polyethylen, Polycarbonat oder Polyurethan enthält.

Diese Polymere benetzen das dielektrische, keramische Material und sind allesamt nicht wasserlöslich.

Es kann bevorzugt sein, daß das dielektrische, keramische Material einen geringen Temperaturkoeffizienten aufweist.

Elektronische Bauelemente, insbesondere Kondensatoren und Antennen, deren Dielektrikum einen geringen Temperaturkoeffizienten aufweist, finden vielfältige Anwendung im Telekommunikationsbereich. Aufgrund der niedrigen Temperaturen bei der Herstellung des passiven Bauelementes wird die Temperaturspezifikation des Dielektrikums nicht verändert.

Es ist besonders vorteilhaft, daß die Elektroden aus Ag, Au, Cu, Al oder Legierungen der Metalle sind.

Da ein Sintern bei hohen Temperaturen nicht notwendig ist, können preiswerte Metalle, die unter den üblichen Sinterbedingungen oxidiert werden würden, als Elektrodenmaterial eingesetzt werden. Außerdem weisen diese Metalle einen geringen effektiven Serienwiderstand auf.

Desweiteren betrifft die Erfindung ein Verfahren zur Herstellung einer Antenne mit den Merkmale des Anspruchs 6.

Es kann bevorzugt sein, daß nach Anbringen der Elektroden ein zweiter Polymerisationsschritt stattfindet.

Ein typischer Fertigungsprozeß für ein Vielschichtbauelement mit gedruckten metallischen Schichten besteht aus folgenden Schritten:
1. Herstellung einer Suspension aus einem keramischen Pulver, Lösungsmittel, Dispergiermittel, Bindemittel, Verflüssiger etc.
2. usziehen der Suspension zu Schichten
3. Trocknen der Schichten zu grünen keramischen Folien
4. Bedrucken der grünen keramischen Folien mit einer strukturierten metallischen Schicht
5. Stapeln der Folien
6. Laminieren des Stapels
7. Trennen in die einzelnen grünen Produkte
8. Binderausbrand
9. Sintern
10. Aufbringen der Außenkontaktpaste und Einbrennen der Kopfkontakte

Mit Hilfe des erfindungsgemäßen Verfahren werden die meisten Schritte, besonders das Sintern, dieses Fertigungsprozeß überflüssig. Dies vereinfacht und verkürzt nicht nur das Verfahren, es senkt auch die Kosten.

Es ist in allen Ausführungen bevorzugt, daß die Polymerisation thermisch initiiert wird.

Die Polymerisation der Monomere wird thermisch durch Temperaturen unter 400 °C initiiert. Durch diese niedrige Temperaturen während der Herstellung wird einerseits ein formstabiles Produkt erhalten und außerdem werden die Herstellungskosten sowie die CO₂-Emisssion gesenkt.

Es ist außerdem bevorzugt, daß die Menge m an eingesetztem Monomer zwischen 3 Gew.-% ≤ m ≤ 20 Gew.-% bezogen auf die Menge an eingesetztem dielektrischen, keramischen Material liegt.

Durch das Mischungsverhältnis von dielektrischem, keramischen Material und Polymer im Verbundwerkstoff kann die Dielektrizitätskonstante ε auf eine gewünschte Größe eingestellt werden.

Eine dielektrische, keramische Zusammensetzung, die einen Verbundwerkstoff aus einem dielektrischen, keramischen Material und einem organischen Polymer enthält, wird beschrieben.

Unter Verwendung einer dielektrischen, keramischen Zusammensetzung, die einen Verbundwerkstoff aus einem dielektrischen, keramischen Material und einem organischen Polymer enthält, und mit Hilfe des erfindungsgemäßen Herstellungsverfahren kann ein formstabiles elektronisches Bauelement, wie zum Beispiel eine Antenne, beispielsweise ein Stielstrahler, dargestellt werden, die nicht auf eine flache Geometrie beschränkt ist.

Eine Filteranordnung mit einem elektronischen Bauelement, welches ein Dielektrikum und mindestens einer Elektrode aufweist, bei dem das Dielektrikum einen Verbundwerkstoff aus einem dielektrischen, keramischen Material und einem organischen Polymer enthält, wird weiterhin beschrieben.

Im folgenden wird die Erfindung näher erläutert und es wird ein Ausführungsbeispiel angegeben.

Zur Herstellung eines elektronischen Bauelementes wird ein dielektrisches, keramisches Material mit einem Monomer eines wasserunlöslichen organischen Polymers gemischt. Die Mischung erfolgt vorzugsweise in einem organischen Lösungsmittel wie zum Beispiel einem Kohlenwasserstoff, einem aromatischen Kohlenwasserstoff, THF, *N*-Methylpyrrolidon oder γ-Butyrolacton. Als dielektrisches, keramisches Material kann zum Beispiel ein ferroelektrisches Material wie Bariumtitanat, Blei-Zirkon-Titan-Oxid oder beispielsweise ein NP0-Material wie ein substituierter Barium-Neodym-Titan-Perowskit mit Defektstruktur, (Mg,Ca)TiO₃, BaZrO₃, BaTi₄O₉, Ca(Zr,Ti)O₃ oder BaO-Sm₂O₃-5TiO₂ eingesetzt werden. Als Monomere können beispielsweise die Monomere eines Polyimids, eines Polyethylens, eines Polycarbonats oder eines Polyurethans verwendet werden. Die Menge m an eingesetztem Monomer beträgt zwischen 3 und 20 Gew.-% bezogen auf die Menge an eingesetztem dielektrischen, keramischen Materials. Nachdem das gemahlene dielektrische, keramische Material mit dem Monomer eines der Polymere in einem organischen Lösungsmittel vermischt wurde, wird das Lösungsmittel entfernt. Das erhaltene Pulver wird granuliert, indem man es durch ein Sieb mit 300 µm Maschenweite preßt und anschließend in einer Granuliertrommel zu einem Rollgranulat verarbeitet. Das Granulat wird danach unter Einsatz von Preßdruck in die gewünschte Form verpreßt. Diese Formen werden dann Temperaturen bis 400 °C ausgesetzt, um thermisch die Polymerisation der Monomere zu initiieren. Die Polymerisation kann dabei nur zum Teil oder aber auch vollständig ablaufen. Anschließend werden Elektroden beispielsweise mittels Aufdampfverfahren, stromlosen Plattierens, Siebdruck, galvanischen Plattieren und Transferdruckverfahren befestigt. Die Elektroden können zum Beispiel Ag, Au, Cu, Al oder Legierungen dieser Metalle enthalten.

Zur Herstellung von Vielschichtbauelementen können mehrere solcher, nur teilweise polymerisierter, Formen übereinander gestapelt und einem zweiten, thermisch initiierten Polymerisationsschritt unterzogen werden.

Alternativ können zur Herstellung von Vielschichtbauelementen auch Metallstreifen oder -platten mit dem Granulat verpreßt werden. So werden bei der Polymerisation interne Elektroden hergestellt.

Als elektronisches Bauelement kann beispielsweise ein Kondensator, eine Antenne, ein Aktuator oder ein Varistor hergestellt werden. Ein oder mehrere solcher elektronischen Bauelemente können in einer Filteranordnung verwendet werden.

Zur Herstellung eines Scheibenkondensators wurden 5 g des substituierten Barium-Neodym-Titan-Perowskit mit Defektstruktur (# entspricht einer Kationenleerstelle) {Ba_{0,242}Sr_{0.02}Ca_{0.03}Nd_{0.232}Gd_{0.23}#_{0.246}}[Ti_{0.97}Nb_{0.03}]O₃ mit 16.5 mg eines 1:1-Gemisches aus Pyromellithsäuredianhydrid und 4,4'-Diaminodiphenylether in *N*-Methylpyrrolidon gemischt. Anschließend wurde das Lösungsmittel verdampft. Das erhaltene Pulver wurde durch ein Sieb mit 300 µm Maschenweite gepreßt und anschließend in einer Granuliertrommel zu einem Rollgranulat verarbeitet. Das Granulat wurde danach bei einem Preßdruck von 400 MPa in eine Scheibe mit einem Durchmesser von 6 mm und einer Dicke von 500 µm verarbeitet. Die Scheibe wurde unter Stickstoffatmosphäre einer Temperatur von 380 °C ausgesetzt. Abschließend wurden an der Scheibe Elektroden aus Au mittels CVD (Chemical Vapour Deposition) aufgebracht.

Ein Scheibenkondensator wurde in der gleichen Art und Weise wie oben beschrieben hergestellt. Es wurden 26.5 mg des Gemisches aus Pyromellithsäuredianhydrid und 4,4'-Diaminodiphenylether eingesetzt.

Ein Scheibenkondensator wurde in der gleichen Art und Weise wie oben beschrieben hergestellt. Es wurden 50.1 mg des Gemisches aus Pyromellithsäuredianhydrid und 4,4'-Diaminodiphenylether eingesetzt.

Alle erhalten Scheibenkondensatoren wiesen eine Dielektrizitätskonstante ε größer 20, die beiden Scheibenkondensator mit 3.3 und 5.3 Gew.-% an eingesetztem Polyimid-Monomer zeigten sogar eine Dielektrizitätskonstante ε größer 25. Außerdem zeigten alle Scheibenkondensatoren eine NP0-Charakteristik. Der Isolationswiderstand lag in allen Fällen über 3 • 10¹¹ Ωm.

### AUSFÜHRUNGSBEISPIEL

Zur Herstellung einer dielektrischen Antenne wurden 5 g des substituierten Barium-Neodym-Titan-Perowskit mit Defektstruktur (# entspricht einer Kationenleerstelle) {Ba_{0.242}Sr_{0.02}Ca_{0.03}Nd_{0.232}Gd_{0.23}#_{0.246}}[Ti_{0.97}Nb_{0.03}]O₃ mit 50.1 mg eines 1:1-Gemisches aus Pyromellithsäuredianhydrid und 4,4'-Diaminodiphenylether in *N*-Methylpyrrolidon gemischt. Anschließend wurde das Lösungsmittel verdampft. Das erhaltene Pulver wurde durch ein Sieb mit 300 µm Maschenweite gepreßt und anschließend in einer Granuliertrommel zu einem Rollgranulat verarbeitet. Das Granulat wurde danach bei einem Preßdruck von 400 MPa in einen Quader mit 2 x 10 x 16 mm³ Kantenlänge verarbeitet. Der Quader wurde unter Stickstoffatmosphäre einer Temperatur von 380 C ausgesetzt. Abschließend wurde eine Elektrode aus Cu, die sich über vier Seiten des Quaders erstreckte, auf einer Ni/Cr-Haftschicht aufgedampft und galvanisch auf 15 µm Dicke verstärkt.

Die Antenne zeigt eine Resonanzfrequenz von 900 MHz, eine Anpassung bei der Resonanz von -30 dB und eine Effizienz von 80%.

## Patentansprüche

1. Antenne mit einem Dielektrikum und mindestens einer Elektrode, **dadurch gekennzeichnet, daß** das Dielektrikum einen Verbundwerkstoff aus einem dielektrischen, keramischen Material und einem organischen Polymer enthält.

2. Antenne nach Anspruch 1, **dadurch gekennzeichnet, daß** das organische Polymer nicht löslich in Wasser ist.

3. Antenne nach Anspruch 1 oder 2, **dadurch gekennzeichnet, daß** das dielektrische Material ein ferroelektrisches Material ist.

4. Antenne nach Anspruch 3, **dadurch gekennzeichnet, daß** das ferroelektrisches Material ein NP0-Material ist.

5. Antenne nach Anspruch 2, **dadurch gekennzeichnet, daß** das Dielektrikum erhältlich ist durch:
- Mischung des keramischen Materials mit einem Monomer des wasserunlöslichen organischen Polymers;
- Formung der erhaltenen Masse, und
- teilweiser oder vollständiger Polymerisation des Monomers.

6. Verfahren zur Herstellung einer Antenne mit einem Dielektrikum und mindestens einer Elektrode, **dadurch gekennzeichnet daß**
- das dielektrische, keramische Material und ein Monomer eines wasserunlöslichen Polymers gemischt werden
- die erhaltene Masse geformt wird
- das Monomer teilweise oder vollständig polymerisiert wird,
- und die Elektroden angebracht werden.

## Claims

1. An antenna with a dielectric and at least one electrode, **characterized in that** the dielectric comprises a composite material consisting of a dielectric ceramic material and an organic polymer.

2. An antenna as claimed in claim 1, **characterized in that** the organic polymer is not soluble in water.

3. An antenna as claimed in claim 1 or 2, **characterized in that** the dielectric material is a ferroelectric material.

4. An antenna as claimed in claim 3, **characterized in that** the ferroelectric material is an NPO material.

5. An antenna as claimed in claim 2, **characterized in that** the dielectric can be obtained through:
- mixing of the dielectric ceramic material with a monomer of the polymer which is not soluble in water,
- molding into shape of the mass obtained, and
- partly or completely polymerizing the monomer.

6. A method of manufacturing an antenna with a dielectric and at least one electrode, which method is **characterized in that**
- the dielectric ceramic material and a monomer of a polymer that is insoluble in water are mixed together,
- the mass obtained is molded into shape,
- the monomer is partly or completely polymerized, and
- the electrodes are provided.

## Revendications

1. Antenne avec un diélectrique et au moins une électrode, **caractérisée en ce que** le diélectrique contient un matériau composite à partir d'un matériau céramique diélectrique et d'un polymère organique.

2. Antenne selon la revendication 1, **caractérisée en ce que** le polymère organique n'est pas soluble dans l'eau.

3. Antenne selon l'une des revendications 1 ou 2, **caractérisée en ce que** le matériau diélectrique est un matériau ferroélectrique.

4. Antenne selon la revendication 3, **caractérisée en ce que** le matériau ferroélectrique est un matériau NP0.

5. Antenne selon la revendication 2, **caractérisée en ce que** le diélectrique est obtenu par.
- mélange du matériau céramique avec un monomère du polymère organique non soluble dans l'eau;
- moulage de la masse obtenue et
- polymérisation partielle ou complète du monomère.

6. Procédé de préparation d'une antenne avec un diélectrique et au moins une électrode, **caractérisé en ce que**
- le matériau céramique diélectrique et un monomère d'un polymère non soluble dans l'eau sont mélangés
- la masse obtenue est moulée
- le monomère est polymérisé partiellement ou entièrement et
- les électrodes sont appliquées.
